# EUROPEAN PATENT APPLICATION

(11) **EP 3 751 049 A1**
(43) Date of publication of application: **16.12.2020**
(21) Application number: 20178815.5
(22) Date of filing: 08.06.2020
(51) Int. Cl.: D06P 1/34, D06P 1/44, D06P 1/52

(54) **COLORING MEANS FOR TEXTILE DYEING AND PRINTING**

(30) Priority: 12.06.2019 ES 201930539
(71) Applicant: ONDyTEC 2018, S.L., 03801 Alcoy (Alicante) (ES)
(72) Inventor: Francés Vilaplana, Javier, 03801 Alcoy (Alicante) (ES); Grau Llopis, Carlos, 03801 Alcoy (Alicante) (ES); Herrero Monzón, Ana, 03801 Alcoy (Alicante) (ES); Solé Cabanes, Antonio, 03801 Alcoy (Alicante) (ES); Francés Falip, Javier, 03801 Alcoy (Alicante) (ES); Francés Falip, Aitana, 03801 Alcoy (Alicante) (ES); Villalobos Arapa, Shirley Yámily, 03801 Alcoy (Alicante) (ES)
(74) Representative: Ibarra Garcia, Isabel

(57) **Abstract**

The invention relates to a low environmental impact coloring means for textile dyeing and stamping containing a natural coloring material and a recycled PVB resin. The coloring means contain a mordant which offers a firm and long-lasting attachment of the natural colorant or mineral pigment to the textile to be dyed or stamped.

## Description

### Object of the Invention

The present invention proposes a coloring mixture or means for textile dyeing and stamping by applying natural coloring materials and a resin recycled from post-consumer products, the function of which is to fix the coloring materials to the textile.

The object of the invention is to offer low environmental impact coloring means, substantially reducing the contaminating waste produced in textile dyeing and pigmentation methods. The coloring means of the present invention therefore allows achieving stable and long-lasting fixing of the coloring in textile dyeing and stamping.

### Background of the Invention

Methods for dyeing and stamping textiles such as yarns, fabrics, and garments, among others, are widely known in the current state of the art.

The mentioned methods are based on impregnating a textile with a solution or dispersion of a pigment by means of a fixative which maintains textile coloring and/or pigmentation.

In that sense, textiles show some rejection to the absorbed colorant during dying and stamping. This rejection is reduced by the pigments and fixatives used in the preparation of coloring mixtures for dyeing and stamping textiles through different methods such as impregnation and exhaustion textile dyeing, or the method of stamping by means of a wide variety of equipment.

The pigments and fixatives used today include toxic and contaminating components which can be polymethylmethacrylate (PMMA) acrylic resins.

In other words, conventional fixatives and mordants are toxic chemical components that entail a negative environmental impact and generate wastewater flows with significant contaminant load due to the emission of volatile organic compounds during use.

The present invention offers an alternative solution to the use of toxic contaminating materials in the coloring means applied in the methods for textile dyeing and stamping, with the coloring means being sustainable and innovative.

### Description of the Invention

The present invention proposes low environmental impact coloring means or mixture for textile dyeing and stamping incorporating at least one natural coloring material and a recycled PVB resin (polyvinyl butadiene or butyral), allowing a firm fixing of the coloring materials to the textiles, such as yarns, fabrics, or garments, and thereby offering a sustainable and innovative coloring.

The recycled PVB resin comes from materials that have been used previously for other purposes, specifically this resin comes from discarded glass or safety glass, the material thereby becoming part of the production cycle again.

The recycled PVB resin is preferably obtained in the form of powder or dispersion, allowing the natural coloring material to more readily adhere to the textiles.

Moreover, the natural coloring material is a mineral pigment or a colorant.

Additionally, the recycled PVB resin has properties of greater interest than virgin PVB resin for use in textile applications.

In this sense, it must be highlighted that the recycled PVB resin has a lower glass transition temperature and a greater elongation at break than virgin PVB resin.

Therefore, compared with virgin PVB resin, the recycled PVB resin is elastic enough, offering a hand and fixing properties suitable for use in textile dyeing and stamping processes.

The properties associated with the recycled PVB resin offer an advantageous behavior with respect to the use of other synthetic fixatives, such as conventional acrylic resins, for example. The following table shows the values determined for the recycled PVB resin and for the PMMA acrylic resin so as to provide support to the advantageous behavior of the recycled PVB resin.

**Table 1: Properties of the recycled PVB resin and the PMMA acrylic**

| Properties | Recycled PVB | PMMA |
|---|---|---|
| Melt flow index (g/10 min) | 7.48 (at 235°C, 2.16 kg) | 6.5 (at 235°C, 2.16 kg) |
| Density (g/cm³) | 1.03 | 1.14 - 1.21 |
| Tensile strength (MPa) | 18 | 43 |
| Elongation at break (%) | 230 | <40 |
| Melting temperature (°C) | 180 - 190 | 200 |
| Glass transition temperature (°C) | 19.26 | 100 |
| Hardness | 82 | 90 |

The recycled PVB resin has a glass transition temperature between 15°C and 22°C, specifically 19.26°C, with respect to the glass transition temperature of PMMA of 100°C. In other words, the low glass transition temperature of the recycled PVB allows it to offer an elastic and flexible behavior, instead of the rigid and brittle behavior offered by PMMA as a result of its high glass transition temperature.

Moreover, the recycled PVB resin has an elongation at break between 200 and 250%, specifically 230%, with respect to the low elongation at break (less than 40%) of PMMA. Therefore, the elongation at break of the recycled PVB is much higher than that experienced by PMMA.

Finally, based on the parameters listed in the table, it can be observed that the recycled PVB facilitates the fixing of natural coloring materials due to the elongation at break and the tensile strength it offers, thereby allowing great durability of the textile dyeing or stamping despite the influence of external agents.

Based on the foregoing, it is concluded that the recycled PVB resin has qualities which allow the use thereof as a sustainable and innovative substitute for acrylic resins, such as PMMA acrylic resins.

The coloring means prepared using the recycled PVB resin therefore offers improved fixing for textile dyeing and stamping, preventing the use of toxic and contaminating coloring materials and fixatives, such as conventional synthetic fixatives.

Moreover, it should be pointed out that the coloring mixture or means for textile dyeing and stamping, object of the present invention, can be used in the following textile dyeing and stamping methods.

Specifically, the coloring means developed by dyeing will be applied: in fabric, garment, and yarn dyeing as described in detail below:
- Dyeing of fabrics (flat, knit, and non-woven fabrics):
   By means of impregnation or padding.
   By means of exhaustion during handling or a jigger (atmospheric/pressure).
   By means of jet exhaustion (atmospheric/pressure).
   By means of overflow exhaustion (atmospheric/pressure).
- Dyeing of garment:
   Dyeing by means of exhaustion in a tumbler.
- Dyeing of yarn:
   By means of hank exhaustion.
   By means of cone exhaustion.
   By means of continuous padding.

Additionally, the coloring means developed by stamping will be applied by means of:
- Flat (flat bed screen) stamping equipment.
- Rotary stamping equipment.
- Flat table stamping equipment.
- Digital stamping.

Depending on the desired textile application, the coloring means are prepared in the form of a coloring bath, dye, or paste elaborated in an aqueous medium in which the natural material which will be fixed to the textile by means of the recycled PVB resin is incorporated.

Advantageously, the recycled PVB resin offers a very stable and long-lasting fixing of the natural coloring pigments to the textile, even in the event of rubbing.

In this sense, it has been found that the textiles dyed or stamped using the coloring means prepared with the recycled PVB resin have excellent color fastness to laundering and rubbing in both dry and wet conditions. This aspect is hard to obtain when using the natural colorants known today

In the case at hand, the color fastness of the dye on the textile is understood to mean the capacity of the natural colorant material to remain fixed to the textile by means of the recycled PVB resin when a specific external agent acts thereon.

The results of the color fastness of a dye against laundering and rubbing on a 100% cotton fabric, using the natural coloring material fixed with the recycled PVB resin, are shown below.

The 100% cotton fabric is subjected to two tests in which the color fastness of the fabric mentioned in two different cases is determined, namely: color fastness to laundering and color fastness to rubbing, in both dry and wet conditions.

The color fastness for discharge and degradation was determined in the tests, where the degradation level is defined as the change in hue or intensity of the initial dye when an external agent acts thereon. Moreover, discharge is defined as the staining or dyeing intensity of a multifiber specimen when it is washed together with the colored fabric to be analyzed.

The determination of color fastness to laundering is based on the UNE-EN ISO 105-C08:2010 standard. To that end, the color degradation level by means of domestic laundering and commercial laundering is first examined using a phosphate-free reference detergent incorporating a low temperature whitening activator for the purpose of testing the initial dye.

The discharge level in domestic and commercial laundering, in which a multifiber specimen is introduced, is then examined.

The determination of color fastness to rubbing is based on the UNE-EN ISO 105-X 12:2016 standard. Specifically, for rubbing in dry conditions, the degradation of the initial dye is first tested by means of rubbing with a white cotton specimen in dry conditions.

The discharge of the coloring from the sampled fabric is then tested by means of rubbing a white cotton specimen in dry conditions.

Moreover, for rubbing in wet conditions, the degradation of the initial dye is first tested by means of rubbing with a white cotton specimen in wet conditions.

The discharge of the coloring from the fabric is then tested by means of rubbing a white cotton specimen in wet conditions.

The obtained results are compared in a standardized grey scale having values comprised between 1 and 5, wherein the value 1 corresponds to minimum color fastness and the value 5 corresponds to maximum color fastness.

The results obtained from the tests that have been performed are highly favorable because the analyzed cotton textile samples, dyed with a natural colorant fixed with a recycled PVB resin, offer maximum color fastness to laundering and rubbing in dry conditions, obtaining a score of 5/5 in the four tests. Moreover, in the tests to determine color fastness to rubbing in wet conditions, a score of 4/5 has been obtained, this also being a datum which indicates a remarkable color fastness.

Therefore, the obtained color fastness which indicates the fixing of the natural colorant material on the 100% cotton fabric by means of the recycled PVB resin is maximum.

In contrast, when similar tests are performed to determine the color fastness of the natural colorant material applied on textiles by means of acrylic resins, such as PMMA acrylic resins, it can be verified that the obtained values are below the results offered by using the recycled PVB resin as a fixative.

### Preferred Embodiment

As described in detail above, the coloring means object of the invention can be materialized in a coloring bath, dye, or paste.

In a non-limiting embodiment of the invention, an example of preparing a coloring bath is described in detail herein.

The coloring bath is prepared from a solution of the fixative or binder obtained by dispersing the recycled PVB resin, preferably at a concentration between 5 and 250 g/L, in a liquid, preferably water.

The natural coloring material, either a mineral pigment or a colorant, having a concentration between 0.005 g/L and 50 g/L, is added to the previously prepared dispersion of recycled PVB resin. The chosen concentration of the pigment or colorant, within the indicated range, allows obtaining the desired color hues and intensities.

Once the pigment or colorant has been added to the prior dispersion of recycled PVB resin, homogenization is performed before the application thereof on the textile, for the purpose of obtaining a perfectly dispersed and homogenous coloring bath.

Finally, the coloring bath containing the recycled PVB resin and the natural coloring material is adsorbed by the textile by means of one of the applications mentioned in the preceding section, such as fabric dyeing by impregnation.

## Claims

1. Coloring means for textile dyeing and stamping, **characterized in that** it comprises at least one natural coloring material and a recycled PVB resin.

2. Coloring means for textile dyeing and stamping according to claim 1, **characterized in that** the recycled PVB resin is obtained from discarded safety glass.

3. Coloring means for textile dyeing and stamping according to claim 1, **characterized in that** the natural coloring material is a colorant.

4. Coloring means for textile dyeing and stamping according to claim 1, **characterized in that** the natural coloring material is a mineral pigment.

5. Coloring means for textile dyeing and stamping according to claim 1 or 2, **characterized in that** the recycled PVB resin has a glass transition temperature between 15°C and 22°C and an elongation at break between 200 and 250%.

6. Coloring means for textile dyeing and stamping according to claim 1 or 2, **characterized in that** the recycled PVB resin has a concentration between 5 and 250 g/L.

7. Coloring means for textile dyeing and stamping according to claim 1, **characterized in that** the natural coloring material has a concentration between 0.005 g/L and 50 g/L.
